# FASCICULE DE BREVET EUROPEEN

(11) **EP 2 582 923 B1**
(45) Date de publication et mention de la délivrance du brevet: **01.01.2020**
(21) Numéro de dépôt: 11735492.8
(22) Date de dépôt: 14.06.2011
(51) Int. Cl.: F01D 25/22, F02C 3/10, F02C 7/06, F02C 7/36, B64C 27/12

(54) **ARCHITECTURE DE TURBOMOTEUR NON LUBRIFIE**
ARCHITEKTUR FÜR EINEN UNGESCHMIERTEN TURBOMOTOR
OIL-LESS TURBOSHAFT ENGINE CONFIGURATION

(30) Priorité: 15.06.2010 FR 1054717
(43) Date de publication de la demande: 24.04.2013
(73) Titulaire: Safran Helicopter Engines, 64510 Bordes (FR)
(72) Inventeur: BEDRINE, Olivier, 64290 Bosdarros (FR); PATY, Gérard, 64110 Uzos (FR)
(74) Mandataire: Cabinet Beau de Loménie
(86) Numéro de dépôt international: PCT/FR2011/051347
(87) Numéro de publication internationale: WO 2011/157943

(56) Documents cités:
- FR-A- 1 561 824
- FR-A1- 2 831 934
- US-A- 2 937 703
- US-A- 4 813 228
- US-A- 4 899 959
- US-A- 5 977 677
- US-A1- 2005 132 693

## Description

La présente invention concerne le domaine des turbines à gaz et notamment celui des turbomoteurs pour des engins volants tels des hélicoptères.

La présente invention concerne plus particulièrement un turbomoteur, notamment pour un hélicoptère, comportant un générateur de gaz et une turbine libre entraînée en rotation par le flux de gaz généré par le générateur de gaz.

Traditionnellement, le générateur de gaz comporte au moins un compresseur et une turbine couplés en rotation. Le principe de fonctionnement est le suivant : l'air frais entrant dans le turbomoteur est comprimé du fait de la rotation du compresseur avant d'être envoyé vers une chambre de combustion où il est mélangé à un carburant. Les gaz brûlés du fait de la combustion sont ensuite évacués à grande vitesse.

Il se produit alors une première détente dans la turbine du générateur de gaz, durant laquelle cette dernière extrait l'énergie nécessaire à l'entraînement du compresseur et des équipements indispensables au bon fonctionnement du générateur de gaz. Ces équipements sont généralement disposés sur une boite d'accessoires de la turbine à gaz, cette dernière comportant un ensemble de pignons.

La turbine du générateur de gaz n'absorbe pas toute l'énergie cinétique des gaz brûlés et l'excédent d'énergie cinétique correspond au flux de gaz généré par le générateur de gaz.

Ce dernier fournit donc de l'énergie cinétique à la turbine libre de sorte qu'il se produit une seconde détente dans la turbine libre qui transforme cette énergie cinétique en énergie mécanique afin d'entraîner directement ou via un réducteur un organe récepteur, tel la BTP (Boite de Transmission Principale) de l'hélicoptère. On connaît notamment les documents US 2 937 703 et US 2005/0132693 qui décrivent des turbomachines munies d'une boîte de transmission.

Traditionnellement, le générateur de gaz, la turbine libre, la boite d'accessoires et dans certain cas le réducteur, font partis d'un même ensemble « turbomoteur » qui est destiné à être fixé au plancher de l'hélicoptère.

La boîte de transmission principale de l'hélicoptère a pour vocation d'une part de transmettre les efforts de sustentation du rotor à l'ensemble de la structure de l'hélicoptère, de réduire la vitesse entre le turbomoteur et le rotor par le biais de pignons, et de supporter un certain nombre d'équipements. La boîte de transmission principale dispose de son propre système de lubrification qui comporte les mêmes composants du circuit d'huile que ceux du turbomoteur.

Le réducteur, intégré au turbomoteur, qui comporte la partie réduction de puissance afin de réduire la vitesse entre la turbine libre et la boîte de transmission principale (BTP) de l'hélicoptère et l'ensemble des pignons de boite d'accessoires sont continuellement lubrifiés par le circuit d'huile.

Un tel système de lubrification comporte généralement une pompe, un ensemble de filtration, des tuyauteries, un réservoir, des capteurs pour surveiller la pression et la température, un système de refroidissement, ainsi qu'un système de dégazage.

On comprend donc qu'un tel système de lubrification est particulièrement contraignant. Il est notamment source de fuites qui sont susceptibles d'indisposer les opérateurs, et nécessite donc un contrôle du niveau d'huile par le pilote. En outre, le moteur est certifié pour pouvoir supporter pendant un temps donné une interruption de lubrification. Enfin, on ajoute que ce système de lubrification est lourd, couteux, et le plus souvent polluant.

Un objectif de la présente invention est de proposer une architecture de turbomachine pour un hélicoptère permettant de diminuer la taille du système de lubrification.

L'invention porte ainsi sur un ensemble composé d'une turbomachine et d'une boîte de transmission principale (BTP) selon la revendication 1 annexée.

L'exposé porte plus généralement sur une turbomachine d'hélicoptère, l'hélicoptère comportant une boîte de transmission principale, un rotor et un dispositif de réduction de vitesse entièrement logé dans la boîte de transmission principale de l'hélicoptère tout en étant relié audit rotor, la turbomachine comprenant un carter, un générateur de gaz ayant un arbre de générateur de gaz, une turbine libre destinée à être entraînée en rotation par un flux de gaz généré par le générateur de gaz, ladite turbine libre comportant un arbre de turbine libre, turbomachine dans laquelle, lorsque la turbomachine est fixée à la boîte de transmission principale de l'hélicoptère, l'arbre de turbine libre s'étend axialement à l'intérieur de la boîte de transmission principale de l'hélicoptère pour être directement relié au dispositif de réduction de vitesse de l'hélicoptère.

On comprend donc que la turbomachine selon l'invention est dépourvue de réducteur, et de préférence de la boite d'accessoires, contrairement à l'art antérieur décrit ci-dessus. En effet, la réduction de vitesse de la turbine libre se fait uniquement grâce au dispositif de réduction de vitesse qui est logé dans la boîte de transmission principale (BTP) de l'hélicoptère. Par conséquent, on comprend que la lubrification des engrenages du réducteur est réalisée dans la BTP par son propre circuit d'huile et non plus dans la turbomachine comme cela était réalisé auparavant. Grâce à l'invention, la lubrification dans le moteur est donc sensiblement réduite.

Dans l'art antérieur, l'arbre de turbine libre et l'arbre du générateur de gaz sont guidés en rotation par des paliers à roulements. Ces paliers permettent également les reprises d'efforts radiaux et/ou axiaux subis par ces arbres. Dans l'art antérieur, ces paliers sont également lubrifiés grâce au système de lubrification.

Avantageusement, la turbomachine selon l'invention comporte au moins un palier non lubrifié disposé radialement entre le carter de la turbomachine et l'arbre de la turbine libre. On pourra par exemple choisir un palier à air. Par suite, le guidage en rotation de l'arbre de la turbine libre ne nécessite plus de lubrification par huile.

De manière avantageuse, au moins un palier non lubrifié est disposé entre l'arbre du générateur de gaz et le carter de la turbomachine. On pourra par exemple choisir un palier à air. Par suite, le guidage en rotation de l'arbre du générateur de gaz ne nécessite plus de lubrification par huile.

Dans l'art antérieur, une boite d'accessoires composée d'un ensemble de pignons fait partie du réducteur de la turbomachine. Cette boite d'accessoires permet l'entrainement des servitudes nécessaires au bon fonctionnement du générateur de gaz et éventuellement d'équipements spécifiques pour l'hélicoptère, comme par exemple des groupes de climatisation, ou tout autre accessoire. Là-encore, les pignons de la boite à accessoires de l'art antérieur sont lubrifiés grâce au système de lubrification.

Selon l'invention, la boite d'accessoires peut être avantageusement intégrée à la BTP et reliée mécaniquement au générateur de gaz.

Selon une variante, l'ensemble des pignons peut être avantageusement remplacé par des moteurs électriques associés à chaque équipement, lesdits moteurs étant avantageusement reliés à une génératrice, elle même connectée directement à l'arbre du générateur de gaz. On pourra choisir une génératrice haute vitesse, de type « brushless ». Une telle génératrice permet de générer de l'énergie électrique afin d'alimenter les moteurs électriques des différents équipements. En outre, elle ne nécessite pas de lubrification par huile.

Dans la turbomachine de l'art antérieur, les efforts axiaux subis par l'arbre de la turbine libre et l'arbre du générateur de gaz sont également repris par des paliers lubrifiés à l'huile.

Selon l'invention, la reprise des efforts axiaux subis par l'arbre du générateur de gaz est réalisée par un dispositif de reprise des efforts axiaux de l'arbre du générateur de gaz, ce dispositif étant disposé entre la boîte de transmission principale et l'arbre du générateur de gaz ou radialement entre l'arbre de la turbine libre et l'arbre du générateur de gaz. Ce dispositif de reprise des efforts axiaux est de préférence un dispositif de butée axiale lubrifié, tel un roulement lubrifié, qui reste intégré dans la boîte de transmission principale de l'hélicoptère. Dans ce cas, on prévoit en outre un joint d'étanchéité disposé radialement entre l'arbre de la turbine libre et l'arbre du générateur de gaz, grâce à quoi l'huile de lubrification ne pénètre pas dans la turbomachine.

On précise également que les efforts axiaux subis par l'arbre de turbine libre sont avantageusement repris par la boîte de transmission principale de l'hélicoptère par le fait que la turbine libre selon l'invention est destinée à être fixé solidairement au dispositif de réduction.

On comprend donc que la présente invention permet de réaliser une architecture de turbomoteur sans huile, c'est-à-dire totalement dépourvue de système de lubrification d'huile, afin de remédier aux inconvénients précités.

La présente invention porte également sur un hélicoptère selon la revendication 5.

De manière avantageuse, la turbomachine comporte en outre un dispositif de reprise des efforts axiaux de l'arbre de la turbine libre, logé dans la boîte de transmission principale de l'hélicoptère, tout en étant fixé à l'arbre de la turbine libre.

De préférence, le dispositif de reprise des efforts axiaux de l'arbre de la turbine libre comporte un roulement monté entre le dispositif de réduction de vitesse et la boîte de transmission principale, le roulement coopérant avec une butée axiale de la boîte de transmission principale. En outre, l'arbre de la turbine libre est fixé rigidement au dispositif de réduction. La butée est positionnée de manière à retenir axialement l'arbre de la turbine libre notamment dans le cas où les efforts subis par l'arbre de la turbine libre tendent à la tirer axialement vers la tuyère de la turbomachine.

Pour assurer l'étanchéité entre la boîte de transmission principale de l'hélicoptère et le carter de la turbomachine, il est prévu un ou plusieurs organes d'étanchéité qui peuvent être disposés radialement entre l'arbre de la turbine libre et/ou l'arbre du générateur de gaz, le carter de la boîte de transmission principale et/ou le carter de la turbomachine, ceci afin d'éviter que l'huile de lubrification ne s'échappe de la boîte de transmission principale.

Enfin, la turbomachine comporte de préférence une génératrice reliée directement à l'arbre du générateur de gaz, et l'hélicoptère comporte en outre des appareils électriques alimentés en énergie électrique par ladite génératrice.

L'invention sera mieux comprise et ses avantages apparaîtront mieux à la lecture de la description qui suit, de deux modes de réalisation indiqués à titre d'exemples non limitatifs. La description se réfère aux dessins annexés sur lesquels :
- la figure **1** illustre un turbomoteur de l'art antérieur ;
- la figure **2** est une vue en coupe longitudinale d'une turbomachine selon l'invention fixée à la boîte de transmission principale d'un hélicoptère;
- la figure **3** est une vue de détail de la liaison de l'extrémité de l'arbre de turbine libre de la turbomachine de la figure **2** à un réducteur de vitesse disposé dans la boîte de transmission principale de l'hélicoptère ; et
- la figure **4** est une vue de détail d'une variante de la turbomachine de la figure **2** dans laquelle la reprise de l'effort axial de l'arbre du générateur de gaz de la turbomachine est réalisée par l'arbre de la turbine libre.

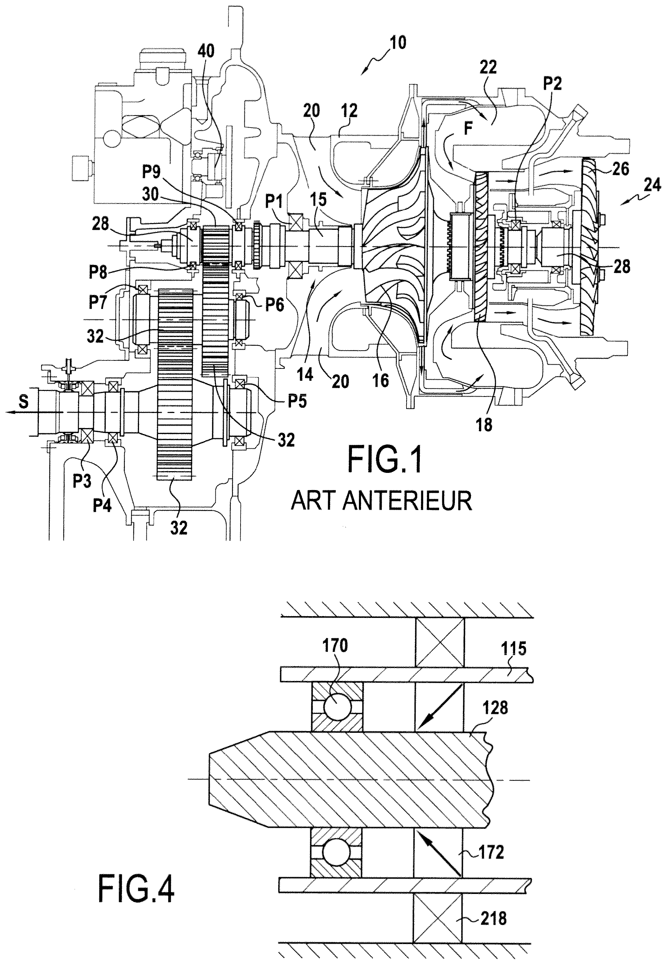

La figure **1** est une vue en coupe longitudinale d'un turbomoteur **10** d'hélicoptère de l'art antérieur. Ce turbomoteur **10** comporte un carter **12** dans lequel est logé un générateur de gaz **14.** Ce dernier comprend un arbre de générateur de gaz **15** portant une roue de compresseur centrifuge **16** ainsi qu'une turbine haute pression **18.** L'air frais pénètre dans le turbomoteur via une entrée d'air **20.** Il est ensuite comprimé par le compresseur **16** avant d'être envoyé dans une chambre de combustion **22** où il est mélangé avec du carburant. La combustion du mélange air comprimé/carburant génère un flux de gaz **F** qui provoque la rotation de la turbine haute pression **18** qui elle-même entraine le compresseur **16.** Le générateur de gaz est porté par des paliers **P1** et **P2** qui permettent un guidage en rotation ainsi qu'une reprise des efforts subis par le générateur de gaz **15.** Ces paliers sont lubrifiés par huile grâce à un système de lubrification non représenté ici. Par ailleurs, le turbomoteur comporte également une turbine libre **24** qui comporte une roue de turbine basse pression **26** fixée à un arbre de turbine libre **28.** Comme on le voit sur la figure **1****,** la roue de turbine basse pression **26** est disposée en aval de la roue de turbine haute pression **18.** Par conséquent, le flux de gaz brûlés sortant du générateur de gaz **14** entraine en rotation l'arbre de turbine libre **28.**

L'extrémité de l'arbre de turbine libre **28** est pourvue d'un pignon **30** qui engrène avec des roues dentées **32.** Ces engrenages, logés dans le réducteur de la turbomachine, permettent de réduire la vitesse de rotation de l'arbre de la turbine libre. La sortie S de ce réducteur est destinée à être reliée à la BTP de l'hélicoptère (non représenté ici).

Comme on le voit sur cette figure, les engrenages **30** ou **32** sont portés par des roulements **P3** à **P9** qui sont également lubrifiés par le système de lubrification.

Une boite d'accessoires de type boite à pignons, référencée **40,** est également logée dans le réducteur de la turbomachine **10.** Elle comporte des engrenages permettant d'entraîner en rotation les équipements indispensables au bon fonctionnement du turbomoteur et accessoirement, des servitudes nécessaires pour l'hélicoptère. Cette boite d'accessoires est également lubrifiée par huile grâce au système de lubrification.

Comme on l'a déjà expliqué ci-dessus, le turbomoteur de l'art antérieur ne peut fonctionner sans système de lubrification.

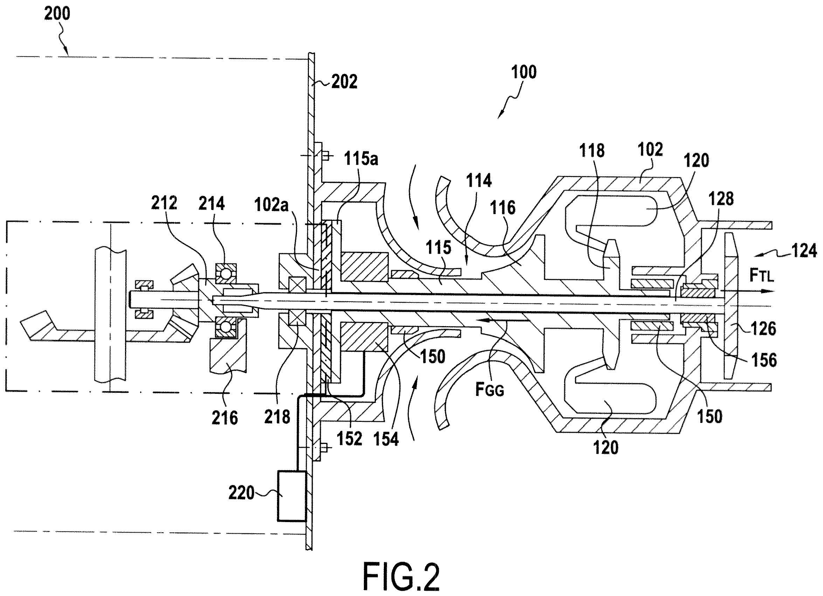

Ceci étant exposé, on va maintenant décrire à l'aide des figures **2** à **4****,** une architecture de turbomachine **100** selon l'invention qui est dépourvue de lubrification par huile. Selon l'invention, la turbomachine **100,** en l'espèce un turbomoteur **100** d'hélicoptère, comporte un carter **102** dans lequel est logé un générateur de gaz **114** comportant un arbre de générateur de gaz **115** qui porte un compresseur centrifuge **116** et une roue de turbine haute pression **118.** Le turbomoteur **100** comporte également une chambre de combustion **120.** Le générateur de gaz **115** est guidé en rotation grâce à deux paliers non lubrifiés, en l'espèce des paliers à air **150** qui sont disposés radialement entre l'arbre du générateur de gaz et le carter **102** du turbomoteur. Ces paliers permettent également la reprise des efforts radiaux subis par le générateur de gaz **115.** Dans l'exemple de la figure **2****,** la reprise des efforts axiaux **F_{GG}** subis par le générateur de gaz **115** est réalisée grâce à un dispositif de butée axiale non lubrifiée **152** qui est disposé axialement entre un épaulement **115a** de l'arbre du générateur de gaz **115** et une partie **102a** du carter **102.** Ce dispositif de butée axiale **152** est en l'espèce une butée axiale à air ou bien magnétique. Le sens des efforts axiaux **F_{GG}** est opposé à celui de l'introduction de l'air frais dans le turbomoteur.

Par ailleurs, une génératrice électrique haute vitesse **154** est reliée directement au générateur de gaz **115.** Cette génératrice électrique est de type brushless. Elle permet de générer de l'énergie électrique afin d'alimenter des appareils électriques disposés dans l'hélicoptère.

Le turbomoteur **100** comporte en outre une turbine libre **124** qui comporte une roue de turbine basse pression **126** fixée à un arbre de turbine libre **128.**

La reprise des efforts radiaux et le guidage en rotation de l'arbre de la turbine libre **128** sont réalisés grâce à au moins un palier non lubrifié **156** qui est disposé radialement dans le carter de la turbomachine entre le carter **102** et l'arbre de turbine libre **128.** De préférence, ce palier **156** est disposé à proximité de la roue de turbine libre **126.** En l'espèce, il s'agit d'un palier à air.

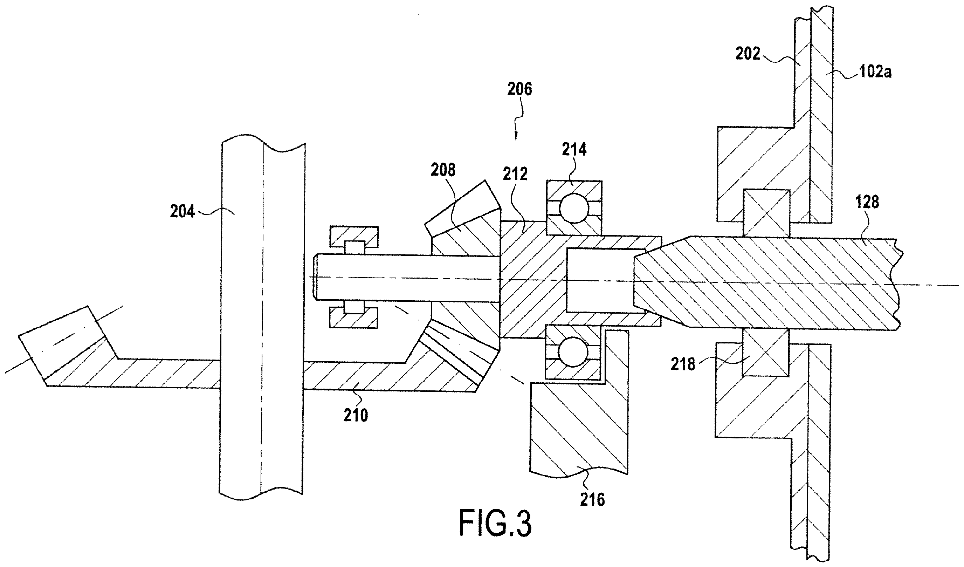

Comme on le comprend à l'aide de la figure **2****,** le turbomoteur **100** est destiné à être fixé à la boîte de transmission principale **202** de l'hélicoptère **200** de sorte que l'arbre de turbine libre **128** s'étend à l'intérieur de la boîte de transmission principale **202,** comme cela est mieux visible sur la figure **3****.**

L'hélicoptère **200,** qui est également objet de la présente invention, comporte un rotor **204** relié à des pales (non représentées ici), ainsi qu'un dispositif de réduction de vitesse **206** qui est entièrement logé à l'intérieur de la boîte de transmission principale **202.** Le turbomoteur **100** ne comporte pas de réducteur de vitesse de la turbine libre **128,** contrairement à l'art antérieur.

Ce dispositif de réduction de vitesse **206** est relié d'une part au rotor **202** par le biais d'engrenages **208, 210** et d'autre part directement à l'arbre de la turbine libre **128** par le biais d'un manchon de couplage **212** fixé au pignon de puissance **208.** La reprise des efforts axiaux **F_{TL}** subis par l'arbre de turbine libre **128** est avantageusement réalisée grâce à un dispositif de reprise des efforts axiaux constitué en l'espèce d'un roulement **214** monté sur le manchon **212** et coopérant avec une butée axiale **216** de la boîte de transmission principale **202.** Cette butée reprend les efforts axiaux qui tendent à faire sortir l'arbre de turbine libre **128** hors du carter du turbomoteur. Ce roulement **214** permet également de reprendre une partie des efforts radiaux subis par l'arbre de turbine libre et par le pignon de puissance **208.**

Ce roulement **214** est lubrifié par des moyens de lubrification de l'hélicoptère. Pour éviter les fuites d'huile vers l'extérieur et notamment vers l'intérieur du boitier du turbomoteur, un joint d'étanchéité **218** est disposé radialement entre l'arbre de turbine libre **128** et la boîte de transmission principale **202.** Un autre joint peut également être disposé entre l'arbre de turbine libre **128** et le carter du turbomoteur.

A l'aide de la figure **4****,** on va décrire une variante du turbomoteur de la figure **2** et plus précisément une variante du dispositif de reprise des efforts axiaux de l'arbre du générateur de gaz **115.** Dans cette variante, un roulement **170** est monté radialement entre une extrémité de l'arbre de générateur de gaz **115** et l'arbre de turbine libre **128.** Grâce à cette configuration, les efforts axiaux subis par l'arbre du générateur de gaz **128** sont repris par l'arbre de turbine libre **128.** Ce roulement **170** étant lubrifié, un joint d'étanchéité **172** est prévu entre l'arbre du générateur de gaz **115** et l'arbre de turbine libre **128** afin d'éviter les fuites d'huile. Cette variante permet de s'affranchir du dispositif de butée axiale non lubrifié **152** afin de réduire le coût du turbomoteur.

A la lumière de ce qui précède, on conçoit que l'architecture de turbomoteur exposée ici permet de se passer de système de lubrification par huile.

## Revendications

1. Ensemble composé d'une turbomachine (100) et d'une boîte de transmission principale (BTP) pour un hélicoptère muni d'un rotor (204),
ladite boîte de transmission principale comportant un dispositif de réduction de vitesse (206) entièrement logé dans la boîte de transmission principale (202) tout en étant apte à être relié audit rotor,
la turbomachine, dépourvue de réducteur de vitesse, comprenant un carter (102), un générateur de gaz (114) ayant un arbre de générateur de gaz (115), une turbine libre (124) destinée à être entraînée en rotation par un flux de gaz généré par le générateur de gaz, ladite turbine libre comportant un arbre de turbine libre (128),
dans lequel lorsque la turbomachine est fixée à la boîte de transmission principale (202), l'arbre de turbine libre s'étend axialement à l'intérieur de la boîte de transmission principale (202) pour être directement reliée au dispositif de réduction de vitesse (206),
**caractérisé en ce que** la turbomachine (100) comporte en outre un dispositif de reprise des efforts axiaux de l'arbre du générateur de gaz (170), ce dispositif étant disposé radialement entre l'arbre de turbine libre (128) et l'arbre du générateur de gaz (115), et
**en ce que** la turbomachine (100) comporte en outre un joint d'étanchéité (172) disposé radialement entre l'arbre de turbine libre (128) et l'arbre du générateur de gaz (115).

2. Ensemble selon la revendication **1, caractérisé en ce que** la turbomachine (100) comporte au moins un palier non lubrifié (156) disposé radialement entre le carter (102) et l'arbre de turbine libre (128).

3. Ensemble selon la revendication **1** ou **2, caractérisé en ce que** la turbomachine (100) comporte en outre au moins un palier non lubrifié (150) disposé radialement entre l'arbre du générateur de gaz (115) et le carter de la turbomachine (102).

4. Ensemble selon l'une quelconque des revendications **1** à **3, caractérisé en ce que** la turbomachine (100) comporte en outre une génératrice (154) reliée directement à l'arbre du générateur de gaz.

5. Hélicoptère (200) comportant :
- un rotor (204),
- un ensemble composé d'une turbomachine (100) et d'une boîte de transmission principale (202) selon l'une quelconque des revendications **1** à 4, le carter de la turbomachine étant fixé à la boîte de transmission principale de l'hélicoptère tandis que l'arbre de la turbine libre s'étend axialement à l'intérieur de la boîte de transmission principale en étant relié directement au dispositif de réduction.

6. Hélicoptère selon la revendication 5, caractérisé en qu'il comporte en outre un dispositif de reprise des efforts axiaux de l'arbre de la turbine libre (214, 216), logé dans la boîte de transmission principale de l'hélicoptère tout en étant fixé à l'arbre de la turbine libre.

7. Hélicoptère selon la revendication 6, caractérisé en que le dispositif de reprise des efforts axiaux de l'arbre de la turbine libre comporte un roulement (214) monté sur le dispositif de réduction de vitesse et coopérant avec une butée axiale (216) de la boîte de transmission principale.

8. Hélicoptère selon l'une quelconque des revendications 5 à 7, caractérisé en qu'il comporte en outre un organe d'étanchéité (218) disposée entre la boîte de transmission principale de l'hélicoptère et le carter de la turbomachine.

9. Hélicoptère selon l'une quelconque des revendications 5 à 7, **caractérisé en ce que** la turbomachine comporte une génératrice (154) reliée directement à l'arbre du générateur de gaz, et **en ce que** l'hélicoptère comporte en outre des appareils électriques (220) alimentés en énergie électrique par ladite génératrice.

## Patentansprüche

1. Anordnung bestehend aus einer Turbomaschine (100) und einem Hauptgetriebegehäuse (BTP) für einen mit einem Rotor (204) ausgestatteten Hubschrauber,
wobei das Hauptgetriebegehäuse eine Vorrichtung zur Drehzahlminderung (206) umfasst, die vollständig in dem Hauptgetriebegehäuse (202) untergebracht und gleichzeitig geeignet ist, mit dem Rotor verbunden zu werden,
wobei die Turbomaschine ohne Drehzahlminderer ein Gehäuse (102), einen Gasgenerator (114) mit einer Gasgeneratorwelle (115) und eine freie Turbine (124) umfasst, die dazu bestimmt ist, durch einen von dem Gasgenerator erzeugten Gasstrom in Rotation versetzt zu werden, wobei die freie Turbine eine freie Turbinenwelle (128) umfasst,
wobei sich die freie Turbinenwelle, wenn die Turbomaschine an dem Hauptgetriebegehäuse (202) befestigt ist, axial innerhalb des Hauptgetriebegehäuses (202) erstreckt, um direkt mit der Vorrichtung zur Drehzahlminderung (206) verbunden zu werden,
**dadurch gekennzeichnet, dass** die Turbomaschine (100) ferner eine Vorrichtung zur Wiederaufnahme der Axialkräfte der Gasgeneratorwelle (170) umfasst, wobei diese Vorrichtung radial zwischen der freien Turbinenwelle (128) und der Gasgeneratorwelle (115) angeordnet ist, und
dass die Turbomaschine (100) ferner eine radial zwischen der freien Turbinenwelle (128) und der Gasgeneratorwelle (115) angeordnete Dichtung (172) umfasst.

2. Anordnung nach Anspruch 1, **dadurch gekennzeichnet, dass** die Turbomaschine (100) mindestens ein nicht geschmiertes Lager (156) umfasst, das radial zwischen dem Gehäuse (102) und der freien Turbinenwelle (128) angeordnet ist.

3. Anordnung nach Anspruch 1 oder 2, **dadurch gekennzeichnet, dass** die Turbomaschine (100) ferner mindestens ein nicht geschmiertes Lager (150) aufweist, das radial zwischen der Gasgeneratorwelle (115) und dem Turbomaschinengehäuse (102) angeordnet ist.

4. Anordnung nach einem der Ansprüche 1 bis 3, **dadurch gekennzeichnet, dass** die Turbomaschine (100) ferner einen Generator (154) umfasst, der direkt mit der Gasgeneratorwelle verbunden ist.

5. Hubschrauber (200), umfassend:
- einen Rotor (204),
- eine Anordnung, bestehend aus einer Turbomaschine (100) und einem Hauptgetriebegehäuse (202) gemäß einem der Ansprüche 1 bis 4,
wobei das Turbomaschinengehäuse am Hauptgetriebegehäuse des Hubschraubers befestigt ist, während sich die freie Turbinenwelle axial innerhalb des Hauptgetriebegehäuses erstreckt und direkt mit der Vorrichtung zur Minderung verbunden ist.

6. Hubschrauber nach Anspruch 5, **dadurch gekennzeichnet, dass** er ferner eine Vorrichtung zur Wiederaufnahme der Axialkräfte der freien Turbinenwelle (214, 216) umfasst, die im Hauptgetriebegehäuse des Hubschraubers untergebracht und gleichzeitig an der freien Turbinenwelle befestigt ist.

7. Hubschrauber nach Anspruch 6, **dadurch gekennzeichnet, dass** die Vorrichtung zur Wiederaufnahme der Axialkräfte der freien Turbinenwelle ein Lager (214) umfasst, das an der Vorrichtung zur Drehzahlminderung montiert ist und mit einem axialen Anschlag (216) des Hauptgetriebegehäuses zusammenwirkt.

8. Hubschrauber nach einem der Ansprüche 5 bis 7, **dadurch gekennzeichnet, dass** er ferner ein Dichtungselement (218) umfasst, das zwischen dem Hauptgetriebegehäuse des Hubschraubers und dem Gehäuse der Turbomaschine angeordnet ist.

9. Hubschrauber nach einem der Ansprüche 5 bis 7, **dadurch gekennzeichnet, dass** die Turbomaschine einen Generator (154) umfasst, der direkt mit der Gasgeneratorwelle verbunden ist, und dass der Hubschrauber ferner elektrische Geräte (220) umfasst, die von dem Generator mit elektrischer Energie versorgt werden.

## Claims

1. Assembly comprising a turbine engine (100) and a main gearbox (MGB) for a helicopter having a rotor (204), said main gearbox comprising a speed-reducing device (206) housed entirely within the main gearbox (202) while also being adapted to be connected to said rotor,
the turbine engine, not having a speed reducer, comprising a casing (102), a gas generator (114) with a gas generator shaft (115), and a free turbine (124) for being driven in rotation by a gas stream generated by the gas generator, said free turbine having a free turbine shaft (128),
wherein, when the turbine engine is fastened to the main gearbox (202), the free turbine shaft extends axially into the main gearbox (202) in order to be connected directly to the speed-reducer device (206),
**characterized in that** the turbine engine (100) further includes a device (170) for taking up axial forces from the gas generator shaft, the device being arranged radially between the free turbine shaft (128) and the gas generator shaft (115), and
**in that** the turbine engine (100) further includes a sealing gasket (172) arranged radially between the free turbine shaft (128) and the gas generator shaft (115).

2. Assembly according to claim 1, **characterized in that** the turbine engine (100) includes at least one non-lubricated bearing (156) arranged radially between the casing (102) and the free turbine shaft (128).

3. Assembly according to claim 1 or 2, **characterized in that** the turbine engine (100) further includes at least one non-lubricated bearing (156) arranged radially between the gas generator shaft (115) and the engine casing (102).

4. Assembly according to any one of claims 1 to 3, **characterized in that** the turbine engine (100) further includes an electricity generator (154) directly connected to the gas generator shaft.

5. A helicopter (200) comprising:
• a rotor (204);
• an assembly comprising a turbine engine (100) and a main gearbox (202) according to any one of claims 1 to 4, the engine casing being fastened to the main gearbox of the helicopter with the free turbine shaft extending axially inside the main gearbox and being directly connected to the speed-reducer device.

6. A helicopter according to claim 5, **characterized in that** it further includes a device (214, 216) for taking up axial forces from the free turbine shaft, which device is housed in the main gearbox of the helicopter while being fastened to the shaft of the free turbine.

7. A helicopter according to claim 6, **characterized in that** the device for taking up axial forces from the free turbine shaft comprises a rolling bearing (214) mounted on the speed-reducer device and co-operating with an axial abutment (216) of the main gearbox.

8. A helicopter according to any one of claims 5 to 7, **characterized in that** it further includes a sealing member (218) arranged between the main gearbox of the helicopter and the engine casing.

9. A helicopter according to any one of claims 5 to 7, **characterized in that** the turbine engine includes an electricity generator (154) directly connected to the gas generator shaft, and **in that** the helicopter further includes electrical equipment (220) electrically powered by said generator.
